# FASCICULE DE BREVET EUROPEEN

(11) **EP 2 864 976 B1**
(45) Date de publication et mention de la délivrance du brevet: **07.06.2023**
(21) Numéro de dépôt: 13729988.9
(22) Date de dépôt: 17.05.2013
(51) Int. Cl.: G09F 15/00, G09F 17/00, G09F 19/12

(54) **DISPOSITIF DE SUPPORT PUBLICITAIRE**
WERBESTAND
ADVERTISING STAND DEVICE

(30) Priorité: 21.06.2012 FR 1255824
(43) Date de publication de la demande: 29.04.2015
(73) Titulaire: CAP, 74210 St Ferreol (FR)
(72) Inventeur: CHEVALLOT, Jean-Pierre, F-38700 La Tronche (FR)
(74) Mandataire: Germain Maureau
(86) Numéro de dépôt international: PCT/FR2013/051093
(87) Numéro de publication internationale: WO 2013/190197

(56) Documents cités:
- EP-A1- 2 306 439
- WO-A1-03/041037
- WO-A2-2005/116960
- ES-A1- 2 347 622
- US-A- 5 179 907
- US-A1- 2006 130 380

## Description

La présente invention concerne un dispositif de support publicitaire pour la représentation d'un objet sensiblement cylindrique, telle qu'une canette, une boîte de conserve ou une bouteille.

On connait de l'état de la technique un dispositif de support publicitaire comportant :
- une armature comprenant deux cerceaux et un mât érigé verticalement à l'intérieur des deux cerceaux, les deux cerceaux étant suspendus au mât par des tendeurs ; et
- une voile tubulaire, présentant à ses bords supérieur et inférieur deux fourreaux annulaires, à l'intérieur desquels sont engagés les deux cerceaux.

Un tel dispositif est avantageux en ce qu'il permet une représentation tridimensionnelle d'un objet sensiblement cylindrique au public.

Toutefois, ce dispositif présente une prise au vent élevée. Aussi, lorsqu'il est installé en extérieur, par exemple sur une plage, le dispositif peut être emporté par le vent, ou la toile peut se déchirer.

En outre, le dispositif présente un encombrement imposant ce qui rend son utilisation inadaptée en intérieur, notamment sur un stand d'exposition exigu.

Enfin, le montage, et en alternance le démontage, du dispositif est long et fastidieux à mettre en oeuvre.

On connait également de l'état de la technique un dispositif de support publicitaire comportant :
- une armature comprenant un mât et une potence rectiligne montée sur le mât ; et
- une voile rectangulaire présentant, sur un bord supérieur et un bord latéral, des fourreaux adaptés pour être engagés respectivement sur la potence et sur le mât.

La voile comprend un motif représentant la canette ou la boîte de conserve en perspective.

Lorsque le dispositif est installé en extérieur, il suffit d'orienter le dispositif de telle sorte que la direction du vent soit parallèle à la voile pour que la prise au vent soit minimisée. En outre, le montage, et en alternance le démontage, du dispositif est simplifié.

L'inconvénient d'un tel dispositif reste toutefois que le public perçoit avec évidence que la canette ou la boîte de conserve est représentée de façon bidimensionnelle. Aussi, l'attrait que peut susciter un dispositif tridimensionnel auprès du public est perdu. Le document WO2013/095100A est considéré comme l'art antérieur le plus proche.

L'invention vise à pallier ce dernier inconvénient.

L'invention concerne un dispositif de support publicitaire pour la représentation d'un objet sensiblement cylindrique, telle qu'une canette, une boîte de conserve ou une bouteille, selon la revendication 1.

Les bords de la voile délimitent le contour de l'objet sensiblement cylindrique vu en perspective. La voile toute entière, et non plus seulement un motif présent sur cette voile, matérialise l'objet.

La voile du dispositif selon l'invention permet de renforcer l'illusion d'une représentation tridimensionnelle de l'objet.

Cette illusion est obtenue par la combinaison de caractéristiques structurelles, à savoir la présence d'une potence arquée, d'une voile dont les bords supérieur et inférieur sont arqués, et du motif présent sur la face de support publicitaire figurant une ligne arquée.

Lorsque le motif figure une ligne arquée vers le bas prolongeant les extrémités du bord supérieur, l'illusion est que l'objet est vue de dessus.

Lorsque le motif figure une ligne arquée vers le haut prolongeant les extrémités du bord inférieur, l'illusion est que l'objet est vue de dessous.

Il doit être entendu que le motif figurant la ligne arquée ne constitue en aucun cas une information publicitaire, mais constitue une caractéristique structurelle contribuant à l'illusion d'une représentation tridimensionnelle de l'objet.

La potence, lorsqu'elle est rigide, et le mât permettent de tendre la voile

Le dispositif présente une faible prise au vent. Le dispositif présente un encombrement réduit ce qui rend son utilisation parfaitement adaptée sur un stand d'exposition. Enfin, le montage, et en alternance le démontage du dispositif restent simple et rapide.

Le dispositif selon l'invention peut comporter une ou plusieurs des caractéristiques suivantes.

Suivant une caractéristique, les bords latéraux de la voile sont rectilignes.

Suivant une autre caractéristique, les rayons de courbure de la potence, du bord supérieur de la voile, et du motif figurant la ligne sont identiques. Ainsi, l'illusion d'une représentation tridimensionnelle de l'objet est renforcée plus encore.

Suivant une autre caractéristique, les rayons de courbure de la potence, du bord supérieur de la voile, et du motif figurant la ligne peuvent être distincts. Suivant une forme d'exécution, la potence est montée amovible sur le mât.

Dans ces conditions, l'encombrement du dispositif lorsqu'il est démonté est minimisé.

Par exemple, le mât et/ou la potence sont tubulaires, et le mât et la potence sont emmanchés l'un dans l'autre.

Avantageusement, la potence comprend des moyens d'articulation reliant des premier et second tronçons de potence, permettant une déformation de la potence entre :
- une position de non-utilisation dans laquelle les tronçons de potence s'étendent sensiblement parallèlement ; et
- une position d'utilisation dans laquelle les tronçons de potence s'étendent sensiblement perpendiculairement.

Par exemple, les moyens d'articulation comprennent une rotule reliant les premier et second tronçons de potence.

La voile forme une enveloppe présentant :
- un bord supérieur arqué vers le haut prévu pour recouvrir la potence ;
- deux bords inférieurs arqués vers le bas, opposés au bord supérieur ;
- des premier et second bords latéraux reliant les bords supérieur et inférieurs, le premier bord latéral étant prévu pour recouvrir le mât ;
- deux faces de support publicitaire dont au moins une présente un motif, ce motif figurant une ligne au moins partiellement arquée vers le bas prolongeant les extrémités du bord supérieur, ou une ligne au moins partiellement arquée vers le haut prolongeant les extrémités d'un des bords inférieurs ;
et la voile délimite entre les faces de support publicitaire un volume ouvert, à l'intérieur duquel l'armature peut être engagée.

Dans ces conditions, la voile est engagée sur l'armature à la manière d'une housse ou d'une chaussette.

De préférence, le dispositif comprend des moyens de tension de la voile sur l'armature.

Par exemple, les moyens de tension de la voile sur l'armature comprennent :
- une goupille montée sur le mât, s'étendant transversalement au mât ; et
- une sangle liée à la voile susceptible d'être accrochée à la goupille.

Avantageusement, la sangle présente deux portions de sangle fixées à la voile et dont les extrémités libres sont équipées de moyens de fixation complémentaire, tels que des pièces de tissus à boucles et crochets.

Suivant une caractéristique, le dispositif comporte un élément rapporté sur la voile ou sur la potence, figurant un accessoire de l'objet sensiblement cylindrique, tel qu'une paille ou une anse.

Dans une forme d'exécution, le dispositif comporte une chaine de caractères, par exemple une marque, s'étendant selon une ligne directrice, cette ligne directrice étant arquée vers le bas ou vers le haut.

De préférence, la ligne directrice présente la même courbure que le bord inférieure de la voile.

Avantageusement, les caractères de la chaine de caractères sont dimensionnés de telle sorte que la taille des caractères va en diminuant en allant du centre de la chaine de caractères vers les extrémités de la chaine de caractères.

Suivant une caractéristique, ladite au moins une face de support publicitaire présente au moins une zone arquée vers le haut ou vers le bas figurant une ombre.

Ainsi, l'illusion d'une vue tridimensionnelle de l'objet est renforcée.

Suivant une autre caractéristique, le mât présente un décrochement, de manière à épouser la forme d'un col de bouteille ou de canette.

L'invention concerne également un procédé de fabrication d'un dispositif de support publicitaire pour la représentation d'un objet sensiblement cylindrique, telle qu'une canette, une boîte de conserve ou une bouteille, selon la revendication 14.

L'invention sera mieux comprise à l'aide de la description qui suit en référence au dessin schématique annexé représentant, à titre d'exemple non limitatif, cinq formes d'exécution d'un dispositif de support publicitaire pour la représentation d'un objet sensiblement cylindrique selon l'invention.
Figure 1 est une vue de face d'un premier dispositif de support publicitaire pour la représentation d'une canette dont l'opercule est fermé ;
Figure 2 est une vue en coupe transversale selon un plan II-II du dispositif de figure 1 ;
Figure 3 est une vue en coupe longitudinale selon un plan III-III du dispositif de figure 1 ;
Figure 4 est une vue de face d'une armature équipant le dispositif des figures 1 à 3, en configuration montée ;
Figure 5 est une vue de face d'une première forme d'exécution d'une potence équipant l'armature de figure 4, en configuration démontée ;
Figure 6 est une vue de face d'une seconde forme d'exécution d'une potence équipant l'armature de figure 4, en position de non-utilisation ;
Figure 7 est une vue de face de la potence de figure 6, en position d'utilisation ;
Figure 8 est une vue de face d'un deuxième dispositif de support publicitaire pour la représentation d'un verre comprenant un glaçon ;
Figure 9 est une vue de face d'un troisième dispositif de support publicitaire pour la représentation d'un verre comprenant une paille et une rondelle de citron ;
Figure 10 est une vue de face d'un quatrième dispositif de support publicitaire pour la représentation d'une chope de bière ;
Figure 11 est une vue de face d'un cinquième dispositif de support publicitaire pour la représentation d'une canette dont l'opercule est ouvert ;
Figure 12 est une vue de face d'un sixième dispositif de support publicitaire pour la représentation d'une bouteille ; et

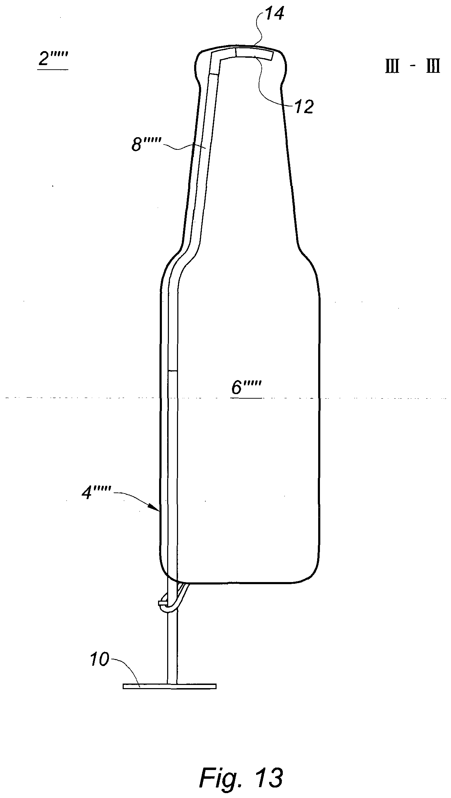

Figure 13 est une vue en coupe longitudinale selon un plan III-III du dispositif de figure 12

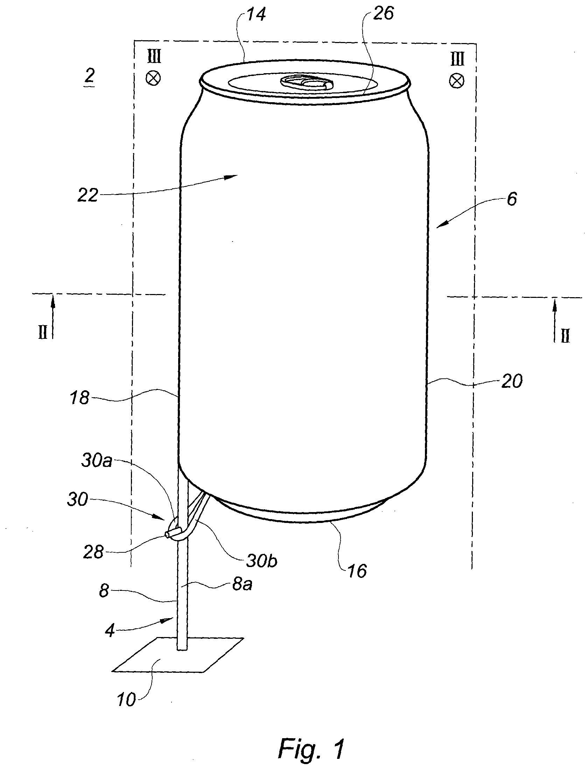

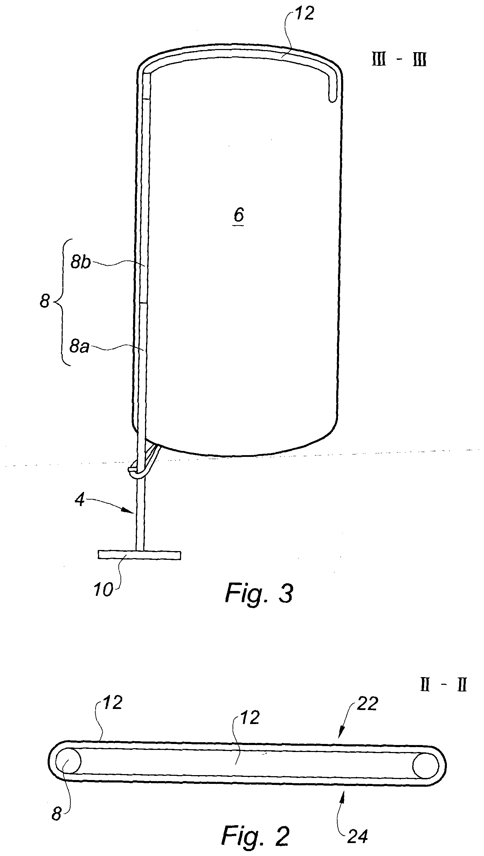

Les figures 1 à 3 représentent un dispositif 2 de support publicitaire pour la représentation d'une canette. Ce dispositif 2 comporte une armature 4 et une voile 6 engagée sur l'armature 4.

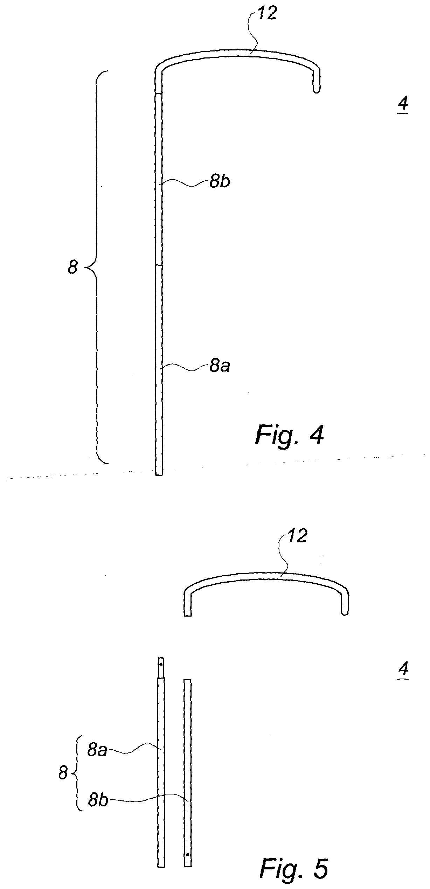

L'armature 4 (représentée aux figures 4 et 5) comprend un mât 8 érigé verticalement. Ce mât 8 présente des tronçons de mât inférieur 8a et supérieur 8b, tubulaires. Les tronçons de mât inférieur 8a et supérieur 8b sont emmanchés l'un dans l'autre. Le tronçon de mât inférieur 8a repose sur un pied 10, de préférence lesté.

L'armature 4 comprend également une potence 12 montée amovible sur le mât 8. A cette fin, la potence 12 est tubulaire et est emmanchée sur le tronçon de mât supérieur 8b. La potence 12 est arquée vers le haut.

La voile 6 forme une enveloppe présentant :
- un bord supérieur 14 arqué vers le haut prévu pour recouvrir la potence 12;
- deux bords inférieurs 16 arqués vers le bas, opposés au bord supérieur 14;
- des bords latéraux 18, 20 reliant les bords supérieur 14 et inférieurs 16 , le bord latéral 18 étant prévu pour recouvrir, au moins en partie, le mât 8 ;
- deux faces de support publicitaire 22, 24 présentant chacune un motif, ce motif figurant une ligne 26 arquée vers le bas prolongeant les extrémités du bord supérieur 14.

Les rayons de courbure de la potence 12, du bord supérieur 14 de la voile 6, et du motif figurant la ligne 26 sont identiques.

La voile 6 délimite entre les faces de support publicitaire 24, 26 un volume ouvert, à l'intérieur duquel l'armature 4 est engagée à la manière d'une chaussette.

La voile 6 est réalisée en une matière suffisamment souple pour épouser parfaitement la forme de l'armature 4, et suffisamment opaque pour masquer l'armature 4 engagée à l'intérieur de la voile 6. Par exemple, la voile 6 peut être réalisée dans une maille de polyester.

Le dispositif 2 comprend des moyens de tension de la voile 6 sur l'armature 4. Les moyens de tension de la voile comprennent une goupille 28 montée sur le mât 8, s'étendant transversalement au mât 8.

Les moyens de tension de la voile 6 comprennent également une sangle 30 liée à la voile 6 susceptible d'être accrochée à la goupille 28. Cette sangle 30 présente deux portions de sangle 30a, 30b fixées à la voile 6 et dont les extrémités libres sont équipées de moyens de fixation complémentaires, tels que des pièces de tissus à boucles et crochets.

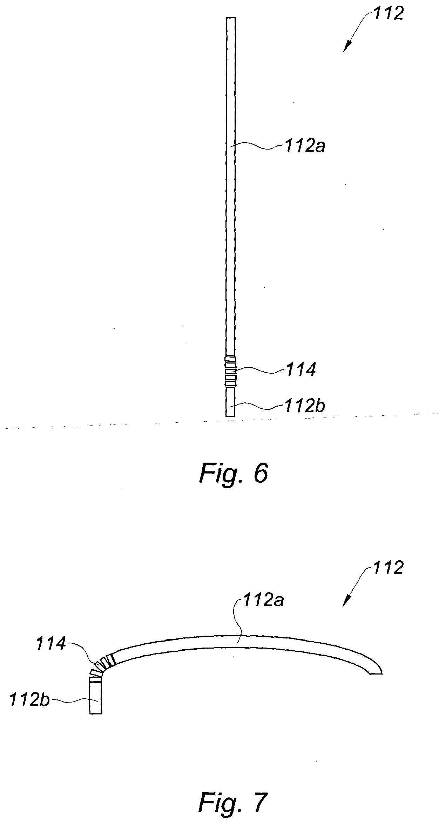

Les figures 6 et 7 représentent une potence 112 identique à la potence 12 à l'exception qu'elle comprend des moyens d'articulation reliant des tronçons de potence 112a, 112b, et permettant une déformation de la potence 112 entre :
- une position de non-utilisation (représentée figure 6) dans laquelle les tronçons de potence 112a, 112b s'étendent sensiblement parallèlement ; et
- une position d'utilisation (représentée figure 7) dans laquelle les tronçons de potence 112a, 112b s'étendent sensiblement perpendiculairement.

Les moyens d'articulation comprennent une rotule 114 reliant les tronçons de potence 112a, 112b.

A titre d'exemple, la rotule 114 peut comporter :
- une pluralité d'anneaux en matière plastique, par exemple en polycarbonate ;
- deux tubes formant embouts de raccordement aux tronçons de de potence 112a et 112b ;
- un élément en matière élastomère inséré dans la pluralité d'anneaux et dans les deux tubes.A titre d'exemple, les tronçons de potence 112a, 112b peuvent être réalisés en polycarbonate. La rotule 114 peut être réalisée en une matière élastomère.

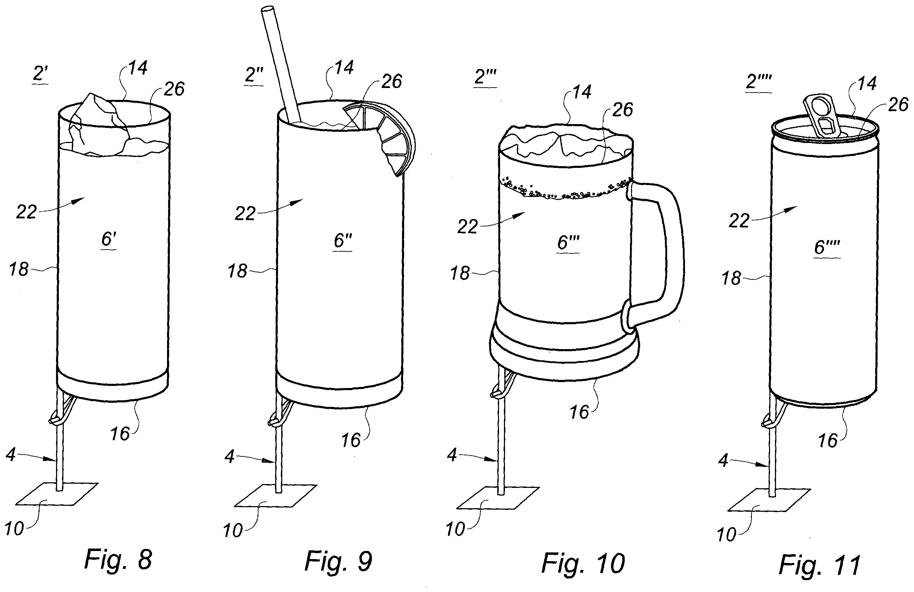

La figure 8 représente un dispositif 2' identique au dispositif 2 à l'exception que la voile 6 est remplacée par une voile 6'. La voile 6' délimite le contour d'un verre contenant un glaçon, le verre et le glaçon étant vu en perspective.

La figure 9 représente un dispositif 2" identique au dispositif 2 à l'exception que la voile 6 est remplacée par une voile 6". La voile 6" délimite le contour d'un verre sur lequel est fixé une rondelle de citron, le verre et le citron étant vus en perspective. Un élément est rapporté sur la voile pour figurer une paille vue en perspective.

La figure 10 représente un dispositif 2‴ identique au dispositif 2 à l'exception que la voile 6 est remplacée par une voile 6‴. La voile 6‴ délimite le contour d'une chope de bière de laquelle déborde de la mousse, la chope et la mousse étant vues en perspective. Un élément est rapporté sur la voile pour figurer une anse vue en perspective.

La figure 11 représente un dispositif 2"" au dispositif 2 à l'exception que la voile 6 est remplacée par une voile 6"". La voile 6"" délimite le contour d'une canette dont l'opercule est ouvert, la canette et l'opercule étant vus en perspective .

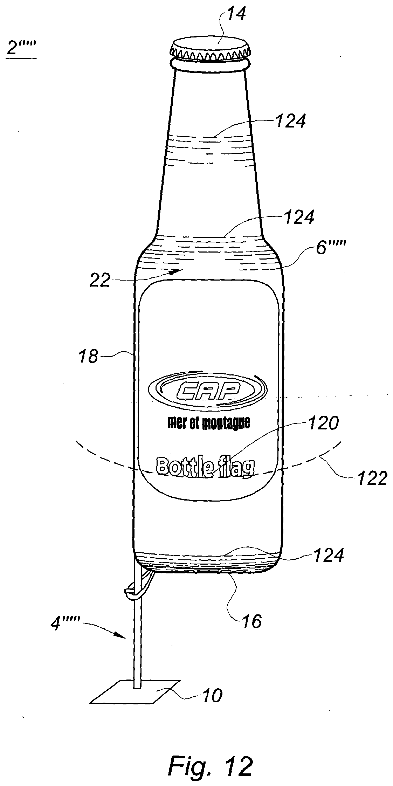

Les figures 12et 13 représentent un dispositif 2'"" identique au dispositif 2 à l'exception que la voile 6 est remplacée par une voile 6'"". La voile 6'"" délimite le contour d'une bouteille, la bouteille étant vue en perspective.

La face de support publicitaire 22 de la voile 6""' présente une chaine de caractères 120, par exemple la marque « Bottle Flag », s'étendant selon une ligne directrice 122. La ligne directrice 122 est arquée vers le bas suivant la même courbure que le bord inférieur 16 de la voile 6ʺ‴. Les caractères de la chaine de caractères 120 sont dimensionnés de telle sorte que la taille des caractères va en diminuant en allant du centre de la chaine de caractères 120 vers les extrémités de la chaine de caractères 120. Par ailleurs, la face de support publicitaire 22 présente des zones 124 arquées vers le bas figurant des ombres.

Enfin, l'armature 4 est remplacée par une armature 4'"" dans laquelle le mât 8ʺ‴ présente un décrochement de manière à épouser la forme du col de la bouteille.

Comme il va de soi, l'invention ne se limite pas aux seules formes d'exécution du dispositif de support publicitaire décrites ci-avant à titre d'exemple, elle en embrasse au contraire toutes les variantes de réalisation.

En variante, le mât 8 peut ne comprendre qu'un unique tronçon.

Toujours en variante, le mât 8 peut être téléscopique.

## Revendications

1. Dispositif (2 ; 2' ; 2" ; 2'" ; 2"", 2""') de support publicitaire pour la représentation d'un objet sensiblement cylindrique, telle qu'une canette, une boîte de conserve ou une bouteille, comportant :
- une armature (4 ; 4""') comprenant un mât (8 ; 8'"") et une potence (12 ; 112) arquée, au moins partiellement, vers le haut montée sur le mât (8 ; 8ʺ‴) ; et
- une voile (6, 6', 6", 6‴, 6ʺʺ, 6ʺ‴) adaptée pour être engagée sur l'armature (4), la voile (6) comprenant :
• un bord supérieur (14) au moins partiellement arqué vers le haut prévu pour recouvrir la potence (12 ; 112) ;
• au moins un bord inférieur (16) arqué vers le bas, opposé au bord supérieur (14) ;
• des premier et second bords latéraux (18, 20) reliant les bords supérieur (14) et inférieur (16), le premier bord latéral (18) étant prévu pour recouvrir le mât (8 ; 8'"") ; et
• au moins une face de support publicitaire (22, 24) présentant un motif, ce motif figurant une ligne (26) au moins partiellement arquée vers le bas prolongeant les extrémités du bord supérieur (14) ou une ligne au moins partiellement arquée vers le haut prolongeant les extrémités du bord inférieur ;
la voile (6, 6', 6", 6'", 6"", 6""') formant une enveloppe présentant :
- un bord supérieur (14) arqué vers le haut prévu pour recouvrir la potence (12 ; 112) ;
- deux bords inférieurs (16) arqués vers le bas, opposés au bord supérieur (14) ;
- des premier et second bords latéraux (18, 20) reliant les bords supérieur (14) et inférieurs (16), le premier bord latéral (18) étant prévu pour recouvrir le mât (8) ;
- deux faces de support publicitaire (22, 24) dont au moins une (22) présente un motif, ce motif figurant une ligne (26) au moins partiellement arquée vers le bas prolongeant les extrémités du bord supérieur (14), ou une ligne au moins partiellement arquée vers le haut prolongeant les extrémités d'un des bords inférieurs (16) ;
la voile (6, 6', 6", 6‴, 6ʺʺ, 6ʺ‴) délimitant entre les faces de support (22, 24) publicitaire un volume ouvert, à l'intérieur duquel l'armature (4) peut être engagée.

2. Dispositif (2; 2' ; 2" ; 2'" ; 2"", 2""') selon la revendication 1, **caractérisé en ce que** la potence (12) est montée amovible sur le mât (8).

3. Dispositif (2; 2' ; 2" ; 2'" ; 2"", 2""') selon la revendication 2, **caractérisé en ce que** le mât (8) et/ou la potence (12 ; 112) sont tubulaires, et **en ce que** le mât (8) et la potence (12 ; 112) sont emmanchés l'un dans l'autre.

4. Dispositif (2; 2' ; 2" ; 2'" ; 2"", 2""') selon l'une quelconque des revendications 1 à 3, **caractérisé en ce que** la potence (112) comprend des moyens d'articulation reliant des premier et second tronçons de potence (112a, 112b), permettant une déformation de la potence(112) entre :
- une position de non-utilisation dans laquelle les tronçons de potence (112a, 112b) s'étendent sensiblement parallèlement ; et
- une position d'utilisation dans laquelle les tronçons de potence (112a, 112b) s'étendent sensiblement perpendiculairement.

5. Dispositif (2; 2' ; 2" ; 2'" ; 2"", 2""') selon la revendication 4, **caractérisé en ce que** les moyens d'articulation comprennent une rotule (114) reliant les premier et second tronçons de potence (112a, 112b).

6. Dispositif (2; 2' ; 2" ; 2'" ; 2"", 2""') selon l'une quelconque des revendications 1 à 5, **caractérisé en ce qu'**il comprend des moyens de tension de la voile (6) sur l'armature (4).

7. Dispositif (2; 2' ; 2" ; 2'" ; 2"", 2""') selon la revendication 6, **caractérisé en ce que** les moyens de tension de la voile (6, 6', 6", 6'", 6) sur l'armature (4) comprennent :
- une goupille (28) montée sur le mât (8), s'étendant transversalement au mât (8) ; et
- une sangle (30) liée à la voile (6, 6', 6", 6‴, 6ʺʺ, 6ʺ‴) susceptible d'être accrochée à la goupille (28).

8. Dispositif (2; 2' ; 2" ; 2'" ; 2"", 2""') selon l'une quelconque des revendications 1 à 7, **caractérisé en ce que** la sangle (30) présente deux portions de sangle (30a, 30b) fixées à la voile (6) et dont les extrémités libres sont équipées de moyens de fixation complémentaire, tels que des pièces de tissus à boucles et crochets.

9. Dispositif (2" ; 2‴) selon l'une quelconque des revendications 1 à 8, **caractérisé en ce qu'**il comporte un élément rapporté sur la voile (6" ; 6'") ou sur la potence (12 ; 112), figurant un accessoire de l'objet sensiblement cylindrique, tel qu'une paille ou une anse.

10. Dispositif (2'"") selon l'une quelconque des revendications 1 à 9, **caractérisé en ce qu'**il comporte une chaine de caractères (120), par exemple une marque, s'étendant selon une ligne directrice (122), cette ligne directrice (122) étant arquée vers le bas ou vers le haut.

11. Dispositif (2'"") selon la revendication 10, **caractérisé en ce que** les caractères de la chaine de caractères (120) sont dimensionnés de telle sorte que la taille des caractères va en diminuant en allant du centre de la chaine de caractères vers les extrémités de la chaine de caractères.

12. Dispositif (2'"") selon l'une quelconque des revendications 1 à 11, **caractérisé en ce que** ladite au moins une face de support publicitaire (22) présente au moins une zone (124) arquée vers le haut ou vers le bas figurant une ombre.

13. Dispositif (2'"") selon l'une quelconque des revendications 1 à 12, **caractérisé en ce que** le mât (8""') présente un décrochement, de manière à épouser la forme d'un col de bouteille ou de canette.

14. Procédé de fabrication d'un dispositif (2; 2' ; 2" ; 2'" ; 2"", 2""') de support publicitaire pour la représentation d'un objet sensiblement cylindrique, telle qu'une canette, une boîte de conserve ou une bouteille, selon la revendication 1 comportant les étapes suivantes :
- fournir une armature (4) comprenant un mât (8) et une potence (12 ; 112) au moins partiellement arquée vers le haut adaptée pour être montée sur le mât (8) ;
- fournir une voile (6, 6', 6", 6‴, 6ʺʺ, 6ʺ‴) adaptée pour être engagée sur l'armature (4), la voile (6) comprenant :
• un bord supérieur (14) au moins partiellement arqué vers le haut prévu pour recouvrir la potence (12 ; 112) ;
• au moins un bord inférieur (16) au moins partiellement arqué vers le bas, opposé au bord supérieur (14) ;
• des premier et second bords latéraux (18, 20) reliant les bords supérieur (14) et inférieur (16), le premier bord latéral (18) étant prévu pour recouvrir le mât (8) ; et
• au moins une face de support publicitaire (22, 24) ;
- réaliser, sur ladite au moins une face de support publicitaire (22, 24), un motif figurant une ligne (26) au moins partiellement arquée vers le bas prolongeant les extrémités du bord supérieur (14), ou une ligne au moins partiellement arquée vers le haut prolongeant les extrémités d'un des bords inférieurs (16), la voile (6, 6', 6", 6‴, 6ʺʺ, 6ʺ‴) délimitant entre les faces de support (22, 24) publicitaire un volume ouvert, à l'intérieur duquel l'armature (4) peut être engagée.

## Patentansprüche

1. Werbeträgervorrichtung (2; 2'; 2"; 2‴; 2ʺʺ, 2ʺ‴) für die Präsentation eines im Wesentlichen zylindrischen Gegenstandes, wie einer Getränkedose, einer Konservendose oder einer Flasche, beinhaltend:
- ein Gestell (4; 4ʺ‴), einen Mast (8; 8ʺ‴) umfassend, und einen mindestens teilweise nach oben gewölbten Ausleger (12; 112), der am Mast (8; 8ʺ‴) montiert ist; und
- eine Schale (6, 6', 6", 6‴, 6ʺʺ, 6ʺ‴), angepasst, um am Gestell (4) angebracht zu werden, wobei die Schale (6) umfasst:
• eine obere Kante (14), die mindestens teilweise nach oben gewölbt ist, und zur Abdeckung des Auslegers (12; 112) vorgesehen ist;
• mindestens eine untere Kante (16), die nach unten gewölbt ist, gegenüber der oberen Kante (14);
• erste und zweite seitliche Kanten (18, 20), die die oberen (14) und unteren (16) Kanten verbinden, wobei die erste seitliche Kante (18) zum Abdecken des Mastes (8; 8ʺ‴) vorgesehen ist; und
• mindestens eine Werbeträgerfläche (22, 24), die ein Motiv aufweist, wobei dieses Motiv eine mindestens teilweise nach unten gewölbte Linie (26) darstellt, die die Enden der oberen Kante (14) verlängert, oder eine mindestens teilweise nach oben gewölbte Linie, die die Enden der untere Kante verlängert;
wobei die Schale (6, 6', 6", 6‴, 6ʺʺ, 6‴ʺ) einen Mantel bildet, aufweisend:
- eine obere Kante (14), die nach oben gewölbt ist, und zur Abdeckung des Auslegers (12; 112) vorgesehen ist;
- zwei untere Kanten (16), die nach unten gewölbt sind, gegenüber der oberen Kante (14);
- erste und zweite seitliche Kanten (18, 20), die die oberen (14) und unteren (16) Kanten verbinden, wobei die erste seitliche Kante (18) zum Abdecken des Mastes (8) vorgesehen ist;
- zwei Werbeträgerflächen (22, 24), von denen mindestens eine (22) ein Motiv aufweist, wobei dieses Motiv eine mindestens teilweise nach unten gewölbte Linie (26) darstellt, die die Enden der oberen Kante (14) verlängert, oder eine mindestens teilweise nach oben gewölbte Linie, die die Enden einer der unteren Kanten (16) verlängert;
wobei die Schale (6, 6', 6", 6‴, 6ʺʺ, 6ʺ‴) zwischen den Werbeträgerflächen (22, 24) ein offenes Volumen abgrenzt, in dessen Innerem das Gestell (4) angebracht werden kann.

2. Vorrichtung (2; 2'; 2"; 2‴; 2ʺʺ, 2ʺ‴) nach Anspruch 1, **dadurch gekennzeichnet, dass** der Ausleger (12) am Mast (8) abnehmbar montiert ist.

3. Vorrichtung (2; 2'; 2"; 2‴; 2ʺʺ, 2ʺ‴) nach Anspruch 2, **dadurch gekennzeichnet, dass** der Mast (8) und/oder der Ausleger (12; 112) röhrenförmig sind, und dass der Mast (8) und der Ausleger (12; 112) ineinandergesteckt sind.

4. Vorrichtung (2; 2'; 2"; 2‴; 2ʺʺ, 2ʺ‴) nach einem der Ansprüche 1 bis 3, **dadurch gekennzeichnet, dass** der Ausleger (112) Gelenkmittel umfasst, die die ersten und zweiten Auslegerabschnitte (112a, 112b) verbinden, eine Verformung des Auslegers (112) ermöglichend, zwischen:
- einer Position der Nichtnutzung, in der sich die Auslegerabschnitte (112a, 112b) im Wesentlichen parallel erstrecken; und
- einer Position der Nutzung, in der sich die Auslegerabschnitte (112a, 112b) im Wesentlichen senkrecht erstrecken.

5. Vorrichtung (2; 2'; 2"; 2‴; 2ʺʺ, 2ʺ‴) nach Anspruch 4, **dadurch gekennzeichnet, dass** die Gelenkmittel ein Kugelgelenk (114) umfassen, das den ersten und den zweiten Auslegerabschnitt (112a, 112b) verbindet.

6. Vorrichtung (2; 2'; 2"; 2‴; 2ʺʺ, 2ʺ‴) nach einem der Ansprüche 1 bis 5, **dadurch gekennzeichnet, dass** sie Mittel zum Spannen der Schale (6) auf das Gestell (4) umfasst.

7. Vorrichtung (2; 2'; 2"; 2‴; 2ʺʺ, 2ʺ‴) nach Anspruch 6, **dadurch gekennzeichnet, dass** die Mittel zum Spannen der Schale (6, 6', 6", 6‴, 6ʺʺ, 6‴ʺ) auf das Gestell (4) umfassen:
- einen Stift (28), der am Mast (8) montiert ist, und sich quer zum Mast (8) erstreckt; und
- ein Gurtband (30), das mit der Schale (6, 6', 6", 6‴, 6ʺʺ, 6‴ʺ) verbunden ist, und am Stift (28) eingehängt werden kann.

8. Vorrichtung (2; 2'; 2"; 2‴; 2ʺʺ, 2ʺ‴) nach einem der Ansprüche 1 bis 7, **dadurch gekennzeichnet, dass** das Gurtband (30) zwei Gurtbandteile (30a, 30b) aufweist, die an der Schale (6) befestigt sind, und deren freie Enden mit Mitteln zur komplementären Befestigung ausgestattet sind, wie beispielsweise Gewebestücken mit Schlaufen und Haken.

9. Vorrichtung (2"; 2‴) nach einem der Ansprüche 1 bis 8, **dadurch gekennzeichnet, dass** sie ein Element beinhaltet, das auf der Schale (6"; 6‴) oder auf dem Ausleger (12; 112) aufgebracht ist, ein Zubehör des im Wesentlichen zylindrischen Gegenstandes darstellend, wie beispielsweise einen Trinkhalm oder einen Henkel.

10. Vorrichtung (2ʺ‴) nach einem der Ansprüche 1 bis 9, **dadurch gekennzeichnet, dass** sie eine Folge von Zeichen (120) beinhaltet, zum Beispiel ein Markenzeichen, das sich entlang einer Leitlinie (122) erstreckt, wobei diese Leitlinie (122) nach unten oder oben gewölbt ist.

11. Vorrichtung (2ʺ‴) nach Anspruch 10, **dadurch gekennzeichnet, dass** die Zeichen der Folge von Zeichen (120) so dimensioniert sind, dass die Größe der Zeichen von der Mitte der Folge von Zeichen zu den Enden der Folge von Zeichen abnimmt.

12. Vorrichtung (2ʺ‴) nach einem der Ansprüche 1 bis 11, **dadurch gekennzeichnet, dass** die mindestens eine Werbeträgerfläche (22) mindestens einen nach oben oder unten gewölbten Bereich (124) aufweist, der einen Schatten darstellt.

13. Vorrichtung (2ʺ‴) nach einem der Ansprüche 1 bis 12, **dadurch gekennzeichnet, dass** der Mast (8ʺ‴) eine Verformung aufweist, so dass er der Form des Halses einer Flasche oder Getränkedose entspricht.

14. Verfahren zur Herstellung einer Werbeträgervorrichtung (2; 2'; 2"; 2‴; 2ʺʺ, 2ʺ‴) für die Präsentation eines im Wesentlichen zylindrischen Gegenstandes, wie einer Getränkedose, einer Konservendose oder einer Flasche, nach Anspruch 1, die folgenden Schritte beinhaltend:
- Bereitstellen eines Gestells (4), einen Mast (8) umfassend, und einen mindestens teilweise nach oben gewölbten Ausleger (12; 112), der angepasst ist, um am Mast (8) montiert zu werden;
- Bereitstellen einer Schale (6, 6', 6", 6‴, 6ʺʺ, 6ʺ‴), die angepasst ist, um am Gestell (4) angebracht zu werden, wobei die Schale (6) umfasst:
• eine obere Kante (14), die mindestens teilweise nach oben gewölbt ist, und zum Abdecken des Auslegers (12; 112) vorgesehen ist;
• mindestens eine untere Kante (16), die mindestens teilweise nach unten gewölbt ist, gegenüber der oberen Kante (14);
• erste und zweite seitliche Kanten (18, 20), die die oberen (14) und unteren (16) Kanten verbinden, wobei die erste seitliche Kante (18) zum Abdecken des Mastes (8) vorgesehen ist; und
• mindestens eine Werbeträgerfläche (22, 24);
- Ausführung, auf der mindestens einen Werbeträgerfläche (22, 24), eines Motivs, das eine mindestens teilweise nach unten gewölbte Linie (26) darstellt, die die Enden der oberen Kante (14) verlängert, oder eine mindestens teilweise nach oben gewölbten Linie, die die Enden einer der unteren Kanten (16) verlängert, wobei die Schale (6, 6', 6", 6‴, 6ʺʺ, 6ʺ‴) zwischen den Werbeträgerflächen (22, 24) ein offenes Volumen abgrenzt, in dessen Innerem das Gestell (4) angebracht werden kann.

## Claims

1. A device (2; 2'; 2"; 2‴; 2"", 2‴ʺ) of an advertising support for the representation of a substantially cylindrical object, such as a beverage can, a tin can or a bottle, including:
- a frame (4; 4‴ʺ) comprising a mast (8; 8ʺ‴) and a bracket (12; 112) arched, at least partially, upwards mounted on the mast (8; 8ʺ‴); and
- a sail (6, 6', 6", 6‴, 6ʺʺ, 6ʺ‴) adapted to be engaged on the frame (4), the sail (6) comprising:
• a top edge (14) at least partially arched upwards, provided to cover the bracket (12; 112);
• at least one bottom edge (16) arched downwards, opposite the top edge (14);
• first and second lateral edges (18, 20) connecting the upper (14) and lower (16) edges, the first lateral edge (18) being provided to cover the mast (8; 8‴ʺ); and
• at least one advertising support face (22, 24) having a pattern, this pattern representing a line (26) at least partially arched downwards extending the ends of the upper edge (14) or a line at least partially arched upwards extending the ends of the lower edge;
the sail (6, 6', 6", 6‴, 6ʺʺ, 6ʺ‴) forming an envelope presenting:
- an upper edge (14) arched upwards provided to cover the bracket (12; 112);
- two lower edges (16) arched downwards, opposite the upper edge (14);
- first and second lateral edges (18, 20) connecting the upper (14) and lower (16) edges, the first lateral edge (18) being provided to cover the mast (8);
- two advertising support faces (22, 24) whose at least one (22) has a pattern, this pattern representing a line (26) at least partially arched downwards extending the ends of the upper edge (14), or a line at least partially arched upwards extending the ends of one of the lower edges (16);
the sail (6, 6', 6", 6‴, 6ʺʺ, 6ʺ‴) delimiting between the advertising support faces (22, 24) an open volume, inside which the frame (4) can be engaged.

2. The device (2; 2'; 2"; 2‴; 2ʺʺ, 2‴ʺ) according to claim 1, **characterized in that** the bracket (12) is removably mounted on the mast (8).

3. The device (2; 2'; 2"; 2‴; 2ʺʺ, 2‴ʺ) according to claim 2, **characterized in that** the mast (8) and/or the bracket (12; 112) are tubular, and **in that** the mast (8) and the bracket (12; 112) are fitted one inside the other.

4. The device (2; 2'; 2"; 2‴; 2ʺʺ, 2‴ʺ) according to any one of claims 1 to 3, **characterized in that** the bracket (112) comprises articulation means connecting first and second bracket sections (112a, 112b), allowing deformation of the bracket (112) between:
- a position of non-use in which the bracket sections (112a, 112b) extend substantially parallel; and
- a position of use in which the bracket sections (112a, 112b) substantially perpendicularly extend.

5. The device (2; 2'; 2"; 2‴; 2ʺʺ, 2‴ʺ) according to claim 4, **characterized in that** the articulation means comprise a ball joint (114) connecting the first and second bracket sections (112a, 112b).

6. The device (2; 2'; 2"; 2‴; 2ʺʺ, 2‴ʺ) according to any one of claims 1 to 5, **characterized in that** it comprises means for tensioning the sail (6) on the frame (4).

7. The device (2; 2'; 2"; 2‴; 2ʺʺ, 2‴ʺ) according to claim 6, **characterized in that** the means for tensioning the sail (6, 6', 6", 6‴, 6) on the frame (4) comprise:
- a pin (28) mounted on the mast (8), extending transversely to the mast (8); and
- a strap (30) linked to the sail (6, 6', 6", 6‴, 6ʺʺ, 6ʺ‴) capable of being hooked to the pin (28).

8. The device (2; 2'; 2"; 2‴; 2ʺʺ, 2‴ʺ) according to any one of claims 1 to 7, **characterized in that** the strap (30) has two strap portions (30a, 30b) fixed to the sail (6) and whose free ends are equipped with complementary fastening means, such as pieces of fabric with hooks and loops.

9. The device (2"; 2‴) according to any one of claims 1 to 8, **characterized in that** it includes an element attached to the sail (6"; 6‴) or to the bracket (12; 112), representing an accessory of the substantially cylindrical object, such as a straw or a handle.

10. The device (2ʺ‴) according to any one of claims 1 to 9, **characterized in that** it includes a string of characters (120), for example a mark, extending along a guideline (122), this guideline (122) being arched downwards or upwards.

11. The device (2ʺ‴) according to claim 10, **characterized in that** the characters of the character string (120) are dimensioned such that the size of the characters decreases from the center of the character string towards the ends of the character string.

12. The device (2ʺ‴) according to any one of claims 1 to 11, **characterized in that** said at least one advertising support face (22) has at least one area (124) arched upwards or downwards depicting a shadow.

13. The device (2ʺ‴) according to any one of claims 1 to 12, **characterized in that** the mast (8ʺ‴) has a recess, so as to match the shape of a bottle or a beverage can neck.

14. A method for manufacturing a device (2; 2'; 2"; 2‴; 2ʺʺ, 2‴ʺ) of an advertising support for the representation of a substantially cylindrical object, such as a beverage can, a tin can or a bottle, according to claim 1 comprising the following steps of:
- providing a frame (4) comprising a mast (8) and a bracket (12; 112) at least partially arched upwards adapted to be mounted on the mast (8);
- providing a sail (6, 6', 6", 6‴, 6ʺʺ, 6ʺ‴) adapted to be engaged on the frame (4), the sail (6) comprising:
• an upper edge (14) at least partially arched upwards provided to cover the bracket (12; 112);
• at least one lower edge (16) at least partially arched downwards, opposite the upper edge (14):
• first and second lateral edges (18, 20) connecting the upper (14) and lower (16) edges, the first lateral edge (18) being provided to cover the mast (8); and
• at least one advertising support face (22, 24):
- producing, on said at least one advertising support face (22, 15 24), a pattern representing a line (26) at least partially arched downwards extending the ends of the upper edge (14), or a line at least partially arched upwards extending the ends of one of the lower edges (16), the sail (6, 6', 6", 6‴, 6ʺʺ, 6ʺ‴) delimiting between the advertising support faces (22, 24) an open volume, inside which the frame (4) can be engaged.
